# EUROPÄISCHE PATENTSCHRIFT

(11) **EP 1 427 616 B1**
(45) Veröffentlichungstag und Bekanntmachung des Hinweises auf die Patenterteilung: **09.05.2007**
(21) Anmeldenummer: 02758053.9
(22) Anmeldetag: 14.06.2002
(51) Int. Cl.: B60S 1/08

(54) **VERFAHREN ZUR STEUERUNG EINER SCHEIBENWISCHVORRICHTUNG SOWIE EINE SCHEIBENWISCHVORRICHTUNG FÜR EIN KRAFTFAHRZEUG**
METHOD FOR CONTROLLING A WINDSCREEN-WIPING DEVICE, AND WINDSCREEN-WIPING DEVICE FOR A MOTOR VEHICLE
PROCEDE DE COMMANDE D'UN ENSEMBLE ESSUIE-GLACE ET ENSEMBLE ESSUIE-GLACE POUR UN VEHICULE A MOTEUR

(30) Priorität: 12.09.2001 DE 10144985
(43) Veröffentlichungstag der Anmeldung: 16.06.2004
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2002/002171
(87) Internationale Veröffentlichungsnummer: WO 2003/026936

(56) Entgegenhaltungen:
- EP-A- 1 010 594
- DE-A- 19 746 375
- DE-C- 19 700 457

## Beschreibung

### Stand der Technik

Die Erfindung betrifft eine Scheibenwischvorrichtung und ein Verfahren zur Steuerung einer Scheibenwischvorrichtung nach Gattung der unabhängigen Ansprüche.

Es sind schon zahlreiche Verfahren zur Steuerung von Scheibenwischvorrichtungen bekannt, beispielsweise aus der DE-C-197 00 457. Bei diesen Verfahren wird der Wischermotor jeweils so angesteuert, dass die Position des Wischblattes auf der Scheibe sich immer auf einer Soll-Trajektorie bewegt. Bei einfacheren Verfahren wird die Geschwindigkeit des Wischermotors und damit die Geschwindigkeit des Wischblattes auf der Scheibe im Bereich der Umkehrlagen reduziert. Hierbei handelt es sich jedoch um gängige Regelungsmechanismen zur positionsgenauen Steuerung des Wischblattes.

### Vorteile der Erfindung

Das erfindungsgemäße Verfahren zur Steuerung einer Scheibenwischvorrichtung mit den Merkmalen des Hauptanspruchs hat den Vorteil, dass das von der Antriebseinrichtung abgebbare Drehmoment zu jedem Zeitpunkt unter Berücksichtigung der Getriebeverhältnisse bestimmt wird. Auf diese Weise kann eine Überlastung der Antriebseinrichtung wirksam verhindert werden, die beispielsweise dann eintritt, wenn Schnee oder Eis auf der Windschutzscheibe eine Blockierung der Scheibenwischvorrichtung hervorruft. Dies ist insbesondere dann problematisch, wenn ein Blockieren der Scheibenwischvorrichtung kurz vor Erreichen der Wendelage des Wischerarmes auftritt. Da die üblichen Scheibenwischvorrichtungen die Wischerarme über ein Kurbelgetriebe antreiben, treten in diesem Fall die höchsten Belastungen auf, da die Antriebsvorrichtung genau in Streck- bzw. Decklage zum Stillstand kommt. Das maximale Anzugsdrehmoment der Antriebsvorrichtung wirkt dann beim kleinsten Übersetzungsverhältnis auf die Scheibenwischvorrichtung. Theoretisch betrachtet würden in diesem Falle bei starren Bauteilen durch den Kniehebeleffekt unendlich hohe Kräfte auftreten, da der Betrag des wirksamen Hebelarms gegen Null strebt.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn das Getriebe als Kurbelgetriebe ausgebildet ist und das abgebbare Drehmoment in Abhängigkeit der Stellung mindestens einer Kurbel bestimmt wird, da die Stellung der Kurbeln verantwortlich für die Drehmomentenübertragung von der Antriebsvorrichtung zum Wischerarm ist.

Darüber hinaus ist es als vorteilhaft anzusehen, wenn die Antriebsvorrichtung eine Drehbewegung abgibt, das Getriebe die Drehbewegung in eine Pendelbewegung mit zwei Wendelagen umsetzt und das Drehmoment vor Erreichen dieser Wendelagen reduziert wird, da in diesen Wendelagen die Kurbel der Antriebsvorrichtung sich in Deck- oder Strecklage befindet und dadurch das übertragene Drehmoment maximal ist.

Weiterhin ist es vorteilhaft, wenn die Antriebseinrichtung einen Strom I aufnimmt, und das Drehmoment durch eine Begrenzung des Stromes I bewirkt wird. Auf diese Weise kann das Drehmoment durch einen einfachen Strombegrenzer begrenzt werden.

Vorteilhafterweise wird die Begrenzung des Stromes I durch eine Kennlinie bewirkt, die in der Steuereinrichtung abgelegt ist, wodurch eine völlig frei wählbare Strombegrenzung in Abhängigkeit der Getriebestellung ermöglicht wird.

Ferner ist es vorteilhaft, wenn die Antriebseinrichtung elektronisch gesteuert wird und über eine Positions- und Drehrichtungserkennung verfügt, um die Strombegrenzung exakt auf die jeweilige Getriebeposition abzustimmen.

Besonders vorteilhaft ist dabei, wenn die Antriebseinrichtung als Reversiermotor ausgebildet ist und nach Erreichen der Wendelage ein höheres Drehmoment von der Antriebseinrichtung abgegeben wird als vor Erreichen der Wendelage, um einen optimalen Blockierschutz zu erhalten.

Darüber hinaus ist es von besonderem Vorteil, wenn das Drehmoment nur dann reduziert wird, wenn eine Nenndrehgeschwindigkeit einer Abtriebswelle der Antriebseinrichtung unterschritten wird. Bei höheren Drehgeschwindigkeiten der Abtriebswelle ist davon auszugehen, dass keine Behinderung oder gar Blockierung der Abtriebswelle stattfindet, wodurch sich eine Drehmomentenreduzierung erübrigt. Lediglich bei einer Behinderung oder gar einer Blockierung der Abtriebswelle ist es notwendig, dass Drehmoment, welches auf die Abtriebswelle wirkt, zu reduzieren.

Die erfindungsgemäße Scheibenwischvorrichtung mit den Merkmalen des Anspruchs 9 hat den Vorteil, dass eine deutliche Gewichtsreduktion am Gesamtsystem durch eine kleinere Dimensionierung der mechanischen Bauteile möglich ist, ohne zusätzliche Steuerungshardware im System integrieren zu müssen. Dadurch ergeben sich vorteilhafter Weise deutlich geringere Kosten bei der Produktion und der Entsorgung des Gesamtsystems.

### Zeichnungen

Ein Ausführungsbeispiel der Erfindung ist in den Zeichnungen dargestellt und in der nachfolgenden Beschreibung näher erläutert. Es zeigen:
Figur 1 eine erfindungsgemäße Wischvorrichtung in schematischer Darstellung,
Figur 2a-2f verschiedene Getriebestellungen einer erfindungsgemäßen Wischvorrichtung,
Figur 3 ein Diagramm des Übersetzungsverhältnisses über der Winkelstellung der Motorkurbel der Antriebseinrichtung, und
Figur 4 ein Diagramm des Drehmomentenbedarfs und der Drehmomentenbegrenzung über der Winkelstellung der Motorkurbel.

### Beschreibung des Ausführungsbeispiels

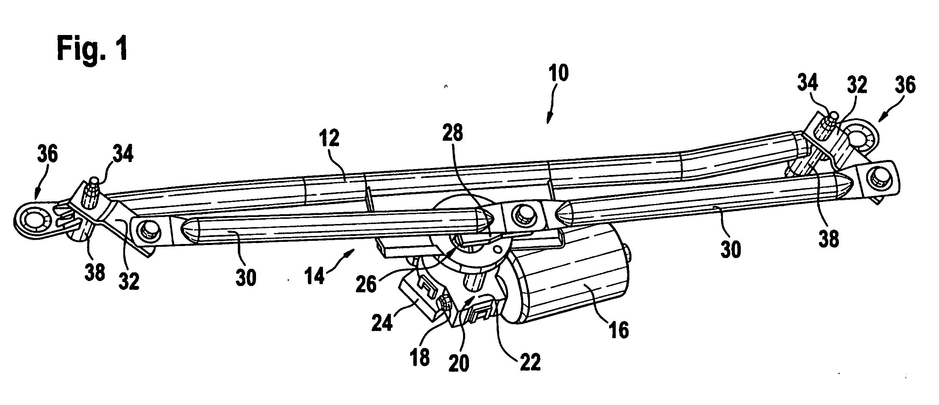

In Figur 1 ist eine erfindungsgemäße Scheibenwischvorrichtung 10 in perspektivischer Darstellung gezeigt. Diese besteht im wesentlichen aus einem Tragrohr 12, einem Getriebe 14 und einer Antriebseinrichtung 16. Die Antriebseinrichtung 16 ist als Elektromotor ausgebildet, der als Reversiermotor oder als umlaufender Motor vorgesehen sein kann. Die Antriebseinrichtung 16 weist eine Ankerwelle 18 auf, die ein Motorgetriebe 20 antreibt. Das Motorgetriebe 20 ist in einem Motorgetriebegehäuse 22 angeordnet, welches von einem Deckel abgeschlossen ist, in dem sich eine Steuereinrichtung 24 befindet. Das Motorgetriebe 20 treibt über eine Abtriebswelle 26 das Getriebe 14 an. Dazu weist das Getriebe 14 eine Motorkurbel 28 auf, die eine mit ihr drehbar verbundene Schubstange 30 bewegt.

Ist die Antriebseinrichtung 16 als Reversiermotor ausgebildet, so pendelt die Motorkurbel 28 bei Bestromung der Antriebseinrichtung 16 zwischen zwei Winkelpositionen hin und her. Bei einem umlaufenden Motor vollführt die Motorkurbel 28 eine umlaufende Rotationsbewegung.

Da die hier dargestellte Scheibenwischvorrichtung zwei Wischerarme antreiben soll, sind an der Motorkurbel 28 zwei Schubstangen 30 angeordnet, so dass sich eine symmetrische Ausgestaltung ergibt. Im folgenden wird nur eine Seite der Scheibenwischvorrichtung beschrieben, da die andere Seite sich symmetrisch verhält.

Die Schubstange 30 ist mit einer Antriebskurbel 32 drehbeweglich verbunden, die bei einer Bewegung der Motorkurbel 28 eine Wischerwelle 34 in pendelnde Bewegung versetzt. Die Wischerwelle 34 ist in einem Wischerlager 36 drehbeweglich, aber axial fixiert gelagert. Dazu weist das Wischerlager 36 eine zylinderförmige Lagerbuchse 38 auf.

Vollführt die Abtriebswelle 26 nun eine kreisförmige Bewegung, so bewegt sich der Verbindungspunkt zwischen der Motorkurbel 28 und der Schubstange 30 ebenfalls auf einer Kreisbahn. Die Schubstange 30 überträgt diese Bewegung auf die Antriebskurbel 32, die daraufhin die Wischerwelle 34 in eine pendelnde Bewegung versetzt. Diese pendelnde Bewegung findet dabei zwischen zwei Wendelagen WL1 und WL2 statt.

Vollführt die Abtriebswelle 26 eine pendelnde Bewegung, so bewegt sich der Verbindungspunkt zwischen der Motorkurbel 28 und der Schubstange 30 auf einem Kreisbogenausschnitt, wodurch die Wischerwelle 34 ebenfalls in eine pendelnde Bewegung versetzt wird. Diese Möglichkeit, die durch einen Reversiermotor realisiert wird, lässt bei der Auslegung der Scheibenwischvorrichtung 10 mehr Freiheiten in der Wahl der Wendelagen WL1, WL2, und weiteren zu. Insbesondere können auf diese Weise sehr einfach Parkstellungen definiert werden, die eingenommen werden, wenn die Wischeranlage nicht in Betrieb ist.

Das Übersetzungsverhältnis eines solchen Kurbelgetriebes verändert sich kontinuierlich mit der Stellung des Getriebes, da der wirksame Hebelarm der Motorkurbel 28 und der Antriebskurbel 32 von ihrem Auslenkungswinkel abhängt, da das an der Wischerwelle 34 anliegende Moment vom senkrechten Abstand der Längsachse der Schubstange 30, von der Wischerwelle 34 beziehungsweise vom senkrechten Abstand zur Abtriebswelle 26 des Motors 16 abhängt.

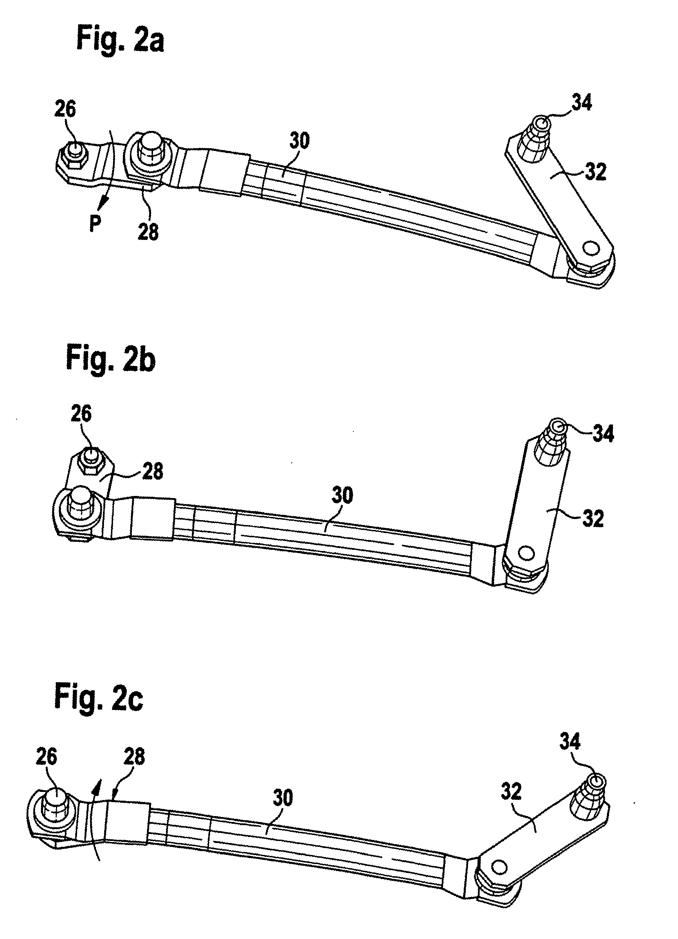

In den Figuren 2a bis 2f sind verschiedene Stellungen des Getriebes 14 dargestellt.

In Figur 2a befindet sich das Getriebe 14 in der Strecklage. Hier liegen Motorkurbel 28 und Schubstange 30 auf einer Geraden, in der Weise, daß der Abstand zwischen Abtriebswelle 26 und dem Verbindungspunkt von Antriebskurbel 32 und Schubstange 30 maximal ist. Daher ist in dieser Position auch eine erste Wendelage WL1 der Wischvorrichtung. Natürlich kann die Wendelage WL1 auch an einer früher erreichten Stelle liegen, wenn das Antriebseinrichtung 16 als Reversiermotor ausgebildet ist. In diesem Fall wird die Strecklage dann nicht erreicht.

Bei einem Reversiermotor als Antriebseinrichtung 16 wird die Motorkurbel 28 nicht über die Strecklage hinaus bewegt, sondern läuft hier im Uhrzeigersinn, wie durch den Pfeil P verdeutlicht.

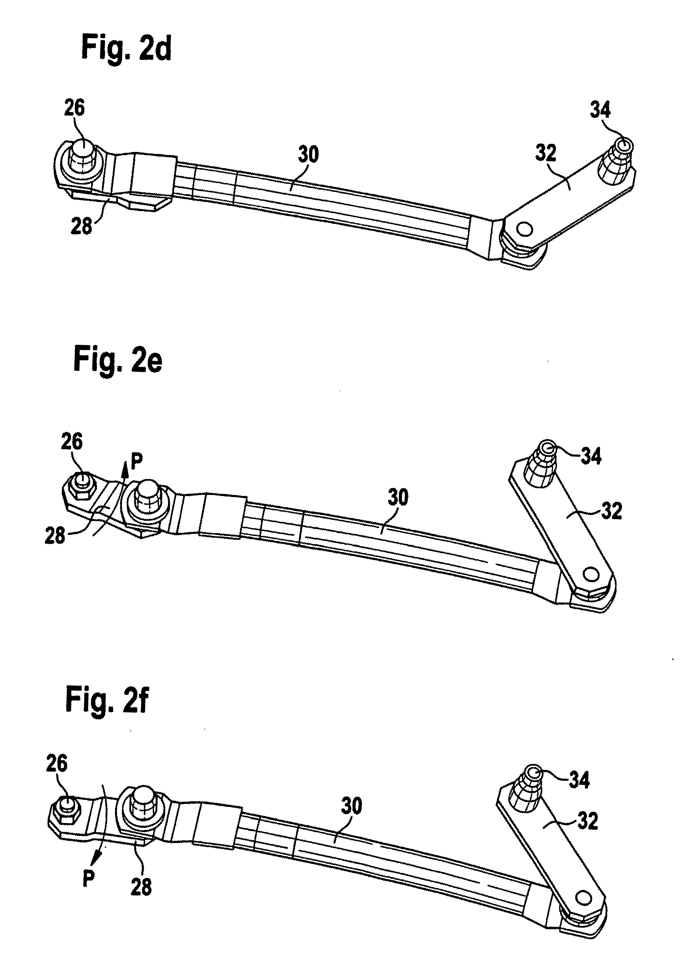

Figur 2b zeigt das Getriebe 14 in einer Mittelposition und Figur 2c kurz vor erreichen der Decklage. In der Decklage, wie in Figur 2d dargestellt, liegen Motorkurbel 28 und Schubstange 30 auf einer Geraden, in der Weise, daß der Abstand zwischen Abtriebswelle 26 und dem Verbindungspunkt von Antriebskurbel 32 und Schubstange 30 minimal ist. Daher ist in dieser Position auch eine zweite Wendelage WL2 der Wischvorrichtung. Natürlich kann auch die Wendelage WL2 auch an einer früher erreichten Stelle liegen, wenn das Antriebseinrichtung 14 als Reversiermotor ausgebildet ist und die Drehrichtung der Motorkubel 28 an früherer Stelle umgekehrt wird.

Figur 2e zeigt das Getriebe 14 wieder kurz vor Erreichen der Strecklage bei Verwendung eines Reversiermotors, der im Bereich der Decklage die Drehrichtung geändert hat. Deshalb ist auch der Pfeil P hier entgegen dem Uhrzeigersinn gerichtet.

Figur 2f zeigt das Getriebe 14 kurz nach Erreichen der Strecklage bei Verwendung eines umlaufenden Motors, der seine Drehrichtung immer beibehält. Der Pfeil P ist hier deshalb wieder im Uhrzeigersinn gerichtet.

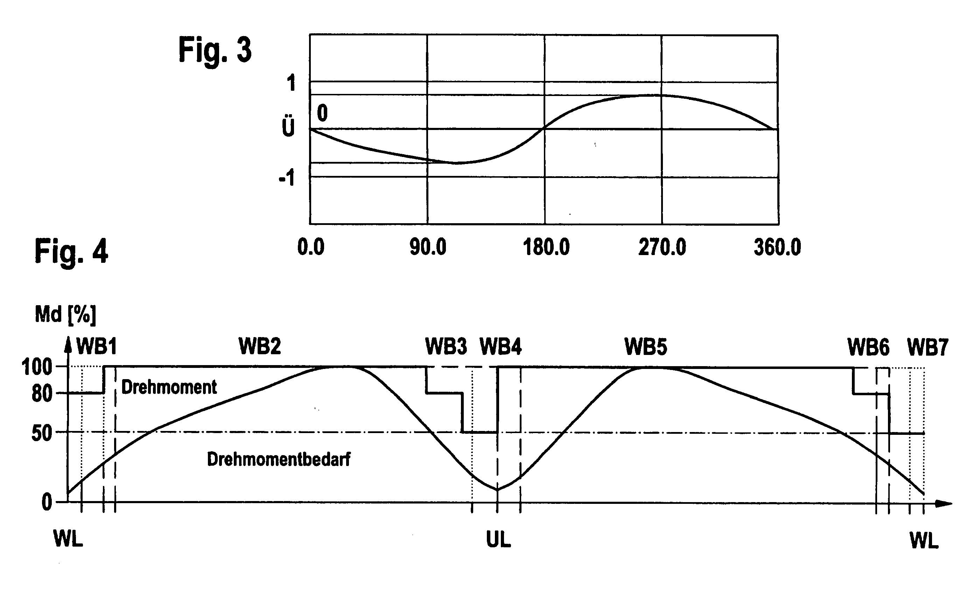

In Figur 3 ist das Übersetzungsverhältnis über dem Auslenkungswinkel der Motorkurbel dargestellt. Der Winkel von 0° entspricht dabei der Strecklage, bei der die Längsachse der Motorkurbel 28 und die Längsachse der Schubstange 30 Parallelen bilden. Beim Winkel von 180° befindet sich das Getriebe in der Decklage. Dort sind wiederum die beiden Längsachsen der Motorkurbel 28 und der Schubstange 30 parallel, jedoch ist die Abtriebswelle 26 der Antriebseinrichtung 16 von der Schubstange 30 verdeckt, so daß der Abstand zwischen Abtriebswelle 26 und dem Verbindungspunkt von Schubstange 30 und Antriebskurbel 32 minimal ist. Der Winkel von 360° entspricht selbstverständlich wieder der Strecklage, also dem Winkel von 0°.

Das Übersetzungsverhältnis Ü wechselt bei 180° das Vorzeichen, da die Drehrichtung der Motorkurbel 28 bei einem umlaufenden Motor gleichbleibt, jedoch die Bewegungsrichtung der Antriebskurbel 32 und damit der Wischerwelle 34 umkehrt. Der Verlauf des Übersetzungsverhältnisses Ü ist im wesentlichen sinusartig, d.h. das Übersetzungsverhältnis ändert sich kontinuierlich über dem Auslenkungswinkel der Motorkurbel 28. Daraus ergibt sich, dass auch das übertragene Drehmoment bei jeder Winkelstellung ein anderes ist.

Üblicherweise werden die Komponenten des Getriebes 14, wie Motorkurbel 28, Schubstange 30, Antriebskurbel 32 und die Lager so dimensioniert, daß das beim Wischvorgang maximal benötigte Drehmoment die Komponenten im Blockierfall nicht beschädigt. Erfindungsgemäß ist nun vorgesehen, das von der Antriebseinrichtung 16 abgebbare Drehmoment in Abhängigkeit der Winkelstellung der Motorkurbel 28 durch die Steuereinrichtung 24 zu begrenzen.

In Figur 4 ist der Drehmomentenbedarf sowie das abgebbare Drehmoment exemplarisch über der Auslenkung der Motorkurbel 28 dargestellt. Da die auf die Schubstange 30 und damit auf die Antriebskurbel 32 und die Wischerwelle 34 wirkende Kraft begrenzt sein soll, ist in den Wendelagen bzw. in der Umkehrlage nur ein geringes Drehmoment von nöten. In diesen Bereichen ist der senkrechte Abstand zwischen der Schubstange 30 und der Abtriebswelle 26 sehr gering, wodurch sich trotz geringem Drehmoment eine große Kraft ergibt. Die Kraft F sollte jedoch nicht so hoch sein, dass Schubstange 30 oder Antriebskurbel 32 oder gar der Wischerarm bei einer Blockierung des Wischblattes oder Wischerarms verbogen werden. Deshalb ist der Drehbereich der Motorkurbel 28 in mehrere Winkelbereiche WB1 bis WB 7 aufgeteilt, und für jeden dieser Winkelbereiche WB1 bis WB 7 ist ein eigenes Maximaldrehmoment festgelegt.

Im ersten Winkelbereich WB1 bewegt sich die Motorkurbel aus der Strecklage heraus, bis zu einem Winkel von beispielweise 10-20°. In diesem Bereich ist das abgebbare Drehmoment auf 80% des maximal abgebbaren Drehmomentes begrenzt. Anschließend ist im zweiten Winkelbereich WB2 das Drehmoment auf ein eingestelltes, maximales Drehmoment begrenzt, welches 100% entsprechen soll und dem maximal von der Scheibenwischvorrichtung benötigten Drehmoment entspricht. Dieser Bereich geht deshalb über den Bereich des maximal benötigten Drehmomentes hinaus.

Im dritten Winkelbereich WB3 wird das abgebbare Drehmoment wiederum auf 80% des maximal abgebbaren Drehmomentes abgesenkt, und in einem vierten Winkelbereich WB4 das Drehmoment auf etwa 50% des maximal abgebbaren Drehmomentes begrenzt. Dieser Bereich ist kurz vor der Umkehrlage, beispielweise 10-15°, und endet mit der Umkehrlage, in der sich das Getriebe, also die Motorkurbel 28 und die Schubstange, 30 in Decklage befinden. Bei Erreichen der Umkehrlage wird in diesem Beispiel das Drehmoment wiederum auf das maximal abgebbare Drehmoment begrenzt, jedoch kann auch hier erst ein reduzierter Bereich, beispielsweise 80% gewählt werden. Dieser Bereich entspricht dem fünften Winkelbereich WB5. Etwa 20-30° vor Erreichen der Wendelage wird das Drehmoment im sechsten Winkelbereich WB6 wiederum auf 80% und etwa 10° vor Erreichen der Wendelage in dem siebten Winkelbereich mit etwa 50% des maximal abgebbaren Drehmomentes begrenzt.

In Figur 4 ist die Antriebseinrichtung 16 als Reversiermotor ausgebildet, der zwischen zwei Winkelstellungen pendelt, welche nicht vollständig der Streck- beziehungsweise Decklage entsprechen. Aus diesem Grunde werden die toten Punkte bei 0° und 180° Kurbelstellung der Motorkurbel 28 vermieden.

Natürlich kann das in Figur 4 gezeigte Ausführungsbeispiel beliebig variiert werden. Beispielsweise kann ein kontinuierlicher Verlauf am Drehmomentenbedarf oder etwas über dem Drehmomentenbedarf eingestellt werden, wodurch die Funktion der Anlage zwar verbessert wird, aber ein erhöhter Steuer- beziehungsweise Regelungsbedarf benötigt wird.

## Patentansprüche

1. Verfahren zur Steuerung einer Scheibenwischvorrichtung (10), insbesondere für ein Kraftfahrzeug, mit mindestens einer Antriebseinrichtung (16), mindestens einem Getriebe (14), das die Bewegung der Antriebseinrichtung (16) auf mindestens eine Wischerwelle (34) vermittelt und ein Übersetzungsverhältnis aufweist, das von der Stellung des Getriebes (14) abhängt und wenigstens einer Steuereinrichtung (24), die das von der Antriebseinrichtung (16) durch eine Abtriebswelle (26) abgebbare Drehmoment steuert, **dadurch gekennzeichnet, daß** die Steuereinrichtung (24) das von der Antriebseinrichtung (16) abgebbare Drehmoment zu jedem Zeitpunkt unter Berücksichtigung des Übersetzungsverhältnisses derart bestimmt, daß eine Überlastung der Antriebseinrichtung (16) verhindert wird, die beispielsweise dann eintritt, wenn Schnee oder Eis auf der Windschutzscheibe eine Blockierung der Scheibenwischvorrichtung (10) hervorruft.

2. Verfahren nach Anspruch 1, **dadurch gekennzeichnet, daß** das Getriebe (14) als Kurbelgetriebe mit einer Motorkurbel (28) ausgebildet ist und das abgebbare Drehmoment in Abhängigkeit der Stellung der Motorkurbel (28) bestimmt, vorzugsweise begrenzt wird.

3. Verfahren nach Anspruch 1 oder 2, **dadurch gekennzeichnet, daß** die Antriebseinrichtung (16) eine Drehbewegung abgibt, das Getriebe (14) die Drehbewegung in eine Pendelbewegung mit zwei Wendelagen (WL1, WL2) umsetzt und das Drehmoment vor erreichen der Wendelagen (WL1, WL2) reduziert wird.

4. Verfahren nach Anspruch 1 oder 2, **dadurch gekennzeichnet, daß** die Antriebseinrichtung (16) eine Pendelbewegung mit zwei Wendelagen (WL1, WL2) abgibt und das Drehmoment vor erreichen wenigstens einer der Wendelagen (WL1, WL2) reduziert wird.

5. Verfahren nach einem der vorhergehenden Ansprüche, **dadurch gekennzeichnet, daß** das die Antriebseinrichtung (16) als eine, einen Strom I aufnehmende, elektrische Antriebseinrichtung (16) ausgebildet ist und das Drehmoment durch eine Begrenzung des Stromes 1 begrenzt wird.

6. Verfahren nach Anspruch 5, **dadurch gekennzeichnet, daß** die Begrenzung des Stromes I entsprechend einer Kennlinie bewirkt wird, die in der Steuereinrichtung abgelegt ist.

7. Verfahren nach einem der Ansprüche 5 oder 6, **dadurch gekennzeichnet, daß** die Antriebseinrichtung (16) elektronisch gesteuert wird und über eine Positions- und/oder Drehrichtungserkennung verfügt.

8. Verfahren nach einem der Ansprüche 4 bis 7, **dadurch gekennzeichnet, daß** die Antriebseinrichtung als Reversiermotor ausgebildet ist und nach Erreichen wenigstens einer Wendelage (WL1) ein höheres Drehmoment von der Antriebseinrichtung (16) abgegeben wird als vor Erreichen der wenigstens einen Wendelage (WL1).

9. Verfahen nach einem der vorhergehenden Ansprüche, **dadurch gekennzeichnet, daß** das Drehmoment nur dann reduziert wird, wenn eine Nenndrehgeschwindigkeit der Abtriebswelle (26) oder einer Ankerwelle eines Motors der Antriebseinrichtung (16) unterschritten wird.

10. Scheibenwischvorrichtung (10), insbesondere für ein Kraftfahrzeug, zur Durchführung des Verfahrens nach einem der vorhergehenden Ansprüche, mit mindestens einer Antriebseinrichtung (16), mindestens einem Getriebe (14), das die Bewegung der Antriebseinrichtung (16) auf mindestens eine Wischerwelle (34) vermittelt und ein Übersetzungsverhältnis aufweist, das von der Stellung des Getriebes (14) abhängt und wenigstens einer Steuereinrichtung (24), die das von der Antriebseinrichtung (16) durch eine Abtriebswelle (26) abgebbare Drehmoment steuert, **dadurch gekennzeichnet, daß** die Steuereinrichtung (24) das von der Antriebseinrichtung (16) abgebbare Drehmoment zu jedem Zeitpunkt unter Berücksichtigung des Übersetzungsverhältnisses derart zu bestimmen vermag, daß eine Überlastung der Antriebseinrichtung (16) verhindert wird, die beispielsweise dann eintritt, wenn Schnee oder Eis auf der Windschutzscheibe eine Blockierung der Scheibenwischvorrichtung (10) hervorruft.

## Claims

1. Method for controlling a windscreen-wiping device (10), in particular for a motor vehicle, with at least one driving device (16), at least one mechanism (14) which imparts the movement of the driving device (16) to at least one wiper shaft (34) and has a transmission ratio which depends on the position of the mechanism (14), and with at least one control device (24) which controls the torque which can be output by the driving device (16) by means of an output shaft (26), **characterized in that** the control device (24) determines the torque which can be output by the driving device (16) at any moment, with the transmission ratio being taken into consideration, in such a manner that an overloading of the driving device (16) is prevented, the overloading occurring, for example, if snow or ice on the windscreen causes the windscreen-wiping device (10) to be blocked.

2. Method according to Claim 1, **characterized in that** the mechanism (14) is designed as a crank mechanism with a motor crank (28), and the torque which can be output is determined, preferably limited, as a function of the position of the motor crank (28).

3. Method according to Claim 1 or 2, **characterized in that** the driving device (16) outputs a rotational movement, the mechanism (14) converts the rotational movement into an oscillating movement with two turning positions (WL1, WL2) and the torque is reduced before the turning positions (WL1, WL2) are reached.

4. Method according to Claim 1 or 2, **characterized in that** the driving device (16) outputs an oscillating movement with two turning positions (WL1, WL2) and the torque is reduced before at least one of the turning positions (WL1, WL2) is reached.

5. Method according to one of the preceding claims, **characterized in that** the driving device (16) is designed as an electric driving device (16) receiving a current I, and the torque is limited by limiting the current I.

6. Method according to Claim 5, **characterized in that** the limiting of the current I is brought about in accordance with a characteristic curve which is stored in the control device.

7. Method according to either of Claims 5 and 6, **characterized in that** the driving device (16) is controlled electronically and has a means for identifying a position and/or direction of rotation.

8. Method according to one of Claims 4 to 7, **characterized in that** the driving device is designed as a reversing motor and, after at least one turning position (WL1) is reached, a higher torque is output by the driving device (16) than before the at least one turning position (WL1) is reached.

9. Method according to one of the preceding claims, **characterized in that** the torque is reduced only if the speed falls below a nominal rotational speed of the output shaft (26) or of an armature shaft of a motor of the driving device (16).

10. Windscreen-wiping device (10), in particular for a motor vehicle, for carrying out the method according to one of the preceding claims, with at least one driving device (16), at least one mechanism (14) which imparts the movement of the driving device (16) to at least one wiper shaft (34) and has a transmission ratio which depends on the position of the gear mechanism (14), and with at least one control device (24) which controls the torque which can be output by the driving device (16) by means of an output shaft (26), **characterized in that** the control device (24) is capable of determining the torque which can be output by the driving device (16) at any moment, with the transmission ratio being taken into consideration, in such a manner that an overloading of the driving device (16) is prevented, which overloading occurs, for example, if snow or ice on the windscreen causes the windscreen-wiping device (10) to be blocked.

## Revendications

1. Procédé de commande d'un dispositif d'essuie-glace (10), notamment d'un véhicule automobile, comportant au moins une installation d'entraînement (16), au moins une transmission (14) qui transmet le mouvement de l'installation d'entraînement (16) à au moins un arbre d'essuie-glace (34) et à un rapport de démultiplication dépendant de la position de la transmission (14) ainsi qu'au moins une installation de commande (24) pour commander le couple à transmettre par l'installation d'entraînement (16) à l'arbre de sortie (26),
**caractérisé en ce que**
l'installation de commande (24) définit le couple que doit fournir l'installation d'entraînement (16) à tout instant en tenant compte du rapport de transmission de façon à éviter toute surcharge de l'installation d'entraînement (16) occasionnée par exemple par de la neige ou de la glace encombrant le pare-brise et bloquant le dispositif d'essuie-glace (10).

2. Procédé selon la revendication 1,
**caractérisé en ce que**
la transmission (14) est réalisée sous la forme d'une transmission à manivelle ayant une manivelle (28) de moteur et le couple fourni est défini et notamment limité en fonction de la position de la manivelle (28) du moteur.

3. Procédé selon la revendication 1 ou 2,
**caractérisé en ce que**
l'installation d'entraînement (16) fournit un mouvement de rotation que la transmission (14) transforme en un mouvement pendulaire avec deux positions d'inversion (WL1, WL2) et elle réduit le couple en amont des positions d'inversion (WL1, WL2).

4. Procédé selon la revendication 1 ou 2,
**caractérisé en ce que**
l'installation d'entraînement (16) fournit un mouvement pendulaire à deux positions d'inversion (WL1, WL2) et elle réduit le couple en amont d'au moins l'une des positions d'inversion (WL1, WL2).

5. Procédé selon l'une des revendications précédentes,
**caractérisé en ce que**
l'installation d'entraînement (16) est une installation d'entraînement électrique (16) recevant un courant d'intensité (I) et on limite le couple en limitant l'intensité (I) du courant.

6. Procédé selon la revendication 5,
**caractérisé en ce que**
la limitation de l'intensité (I) du courant se fait en fonction d'une courbe caractéristique enregistrée dans l'installation de commande.

7. Procédé selon l'une des revendications 5 ou 6,
**caractérisé en ce qu'**
on commande électroniquement l'installation d'entraînement (16) et on dispose d'une détection de position et/ou de sens de rotation.

8. Procédé selon l'une des revendications 4 à 7,
**caractérisé en ce que**
l'installation d'entraînement est un moteur réversible et après avoir atteint au moins une position d'inversion (WL1), l'installation d'entraînement (16) fournit un couple plus important qu'avant d'atteindre au moins une position d'inversion (WL1).

9. Procédé selon l'une des revendications précédentes,
**caractérisé en ce qu'**
on réduit le couple seulement si l'arbre de sortie (26) ou l'arbre d'induit d'un moteur de l'installation d'entraînement (16) passe en dessous d'une vitesse de rotation nominale.

10. Dispositif d'essuie-glace (10) notamment pour un véhicule automobile, pour la mise en oeuvre du procédé selon l'une des revendications précédentes, comportant au moins une installation d'entraînement (16), au moins une transmission (14) qui transmet le mouvement de l'installation d'entraînement (16) à au moins un arbre d'essuie-glace (34) et présente un rapport de démultiplication dépendant de la position de la transmission (14) ainsi qu'au moins une installation de commande (24) pour commander le couple moteur fourni par l'installation d'entraînement (16) à l'arbre de sortie (26),
**caractérisé en ce que**
l'installation de commande (24) détermine à tout instant le couple fourni par l'installation d'entraînement (16) en tenant compte du rapport de démultiplication de façon à éviter la surcharge de l'installation d'entraînement (16) qui se produit par exemple si de la neige ou de la glace encombre le pare-brise et bloque le dispositif d'essuie-glace (10).
